# EUROPEAN PATENT APPLICATION

(11) **EP 0 816 663 A1**
(43) Date of publication of application: **07.01.1998**
(21) Application number: 97109500.5
(22) Date of filing: 11.06.1997
(51) Int. Cl.: F02F 11/00, F16J 15/06

(54) **Internal combustion engine**

(30) Priority: 12.06.1996 IT BO960320
(71) Applicant: MAGNETI MARELLI S.p.A., 20145 Milano (IT)
(72) Inventor: Serra, Gabriele, 40068 S. Lazzaro Di Savena (IT)
(74) Representative: Jorio, Paolo

(57) **Abstract**

An internal combustion engine (1), the actuating assembly (5) of which is contained inside an engine block (3); the actuating assembly (5) being provided with at least one piston (7) moving in reciprocating motion inside a cylindrical cavity (8) of the block (3), and a drive shaft (6) kinetically connected to the piston (7); with a member (10) for closing the block (3) and rigidly connected to the block (3) itself so as to close the cylindrical cavity (8); and with a gasket (16) disposed between the block (3) and the closure member (10) so as to close off the cylindrical cavity (8) hermetically; the gasket (16) incorporating a plurality of sensors (23) for measuring physical-chemical parameters.

## Description

The present invention relates to an internal combustion engine.

It is known that, in the field of internal combustion engines normally used for the propulsion of vehicles, the rotation of the drive shaft is achieved by means of at least one thrust-imparting crank mechanism which is contained within such engines and which is actuated by the violent combustion of a mixture of inflammable gases.

Corresponding to such an expansion is the initiating of a reciprocating movement of a piston of the crank mechanism, and said movement is converted, as is known, into the rotation of said drive shaft. It is known that, to maximise the mechanical work which can be obtained at the drive shaft, it is necessary to control and optimise the values of a large number of parameters of a physical and chemical nature, normally known by the expression "automotive parameters." Of course, the most important event to control is that as a result of which the crank mechanism derives the energy necessary for its movement, i.e. the combustion of the mixture. For this purpose, it is necessary to provide the engine with a plurality of sensors of varying type, including sensors for pressure, temperature and analysis of the gases which form the residue of combustion. The critical nature of the ambient conditions inside the engine (in particular inside the known combustion chamber) and the delicate nature of the sensors have made it necessary for said sensors to be enclosed within casings which are normally of such dimensions that they cannot be used in direct contact with the environment to be controlled. Moreover, the cost of the casing is almost always higher than the cost of the sensor contained therein.

With respect to the foregoing, these sensors are normally positioned in areas of the engine in relation to which said automotive parameters can be evaluated only indirectly and often at some distance from the data collection processor. This means electric wires, even of considerable length, must be used to connect the processor and the sensors; and, as the quality of the transmitted signal is inversely proportional to the length of the wires, filtering devices are required to eliminate so-called noise from the signals.

In other words, to achieve optimum operation of the engine, this has necessarily been equipped with numerous accessory devices of considerable cost and size, and which, in addition to increasing cost, mainly on account of said casings, impose numerous restrictions as regards the manner in which the space inside the engine compartment is employed.

The object of the present invention is to devise an internal combustion engine which does not suffer from the abovementioned drawbacks.

The present invention relates to an internal combustion engine comprising an engine block, which is hollow on the inside, and an actuating assembly contained inside said block; said actuating assembly comprising at least one piston moving in reciprocating motion inside said block, and a drive shaft kinetically connected with said piston; a cylindrical cavity adapted to accommodate said piston in a freely displaceable manner; a member for closing said block, and rigidly connected to said block so as to close said cylindrical cavity; a gasket disposed between said block and the closure member so as to close off said cylindrical cavity hermetically; a chamber provided inside said closure member and facing said cylindrical cavity so as to contain an inflammable mixture; characterised in that said gasket incorporates a plurality of sensors for measuring physical-chemical parameters.

The invention will now be described with reference to the accompanying drawings which illustrate a non-restrictive example of embodiment, wherein:
- Figure 1 is a schematic view in perspective, partly in section and with parts omitted for greater clarity, of an engine in accordance with the present invention; and
- Figure 2 is a plan view of a detail taken from Figure 1.

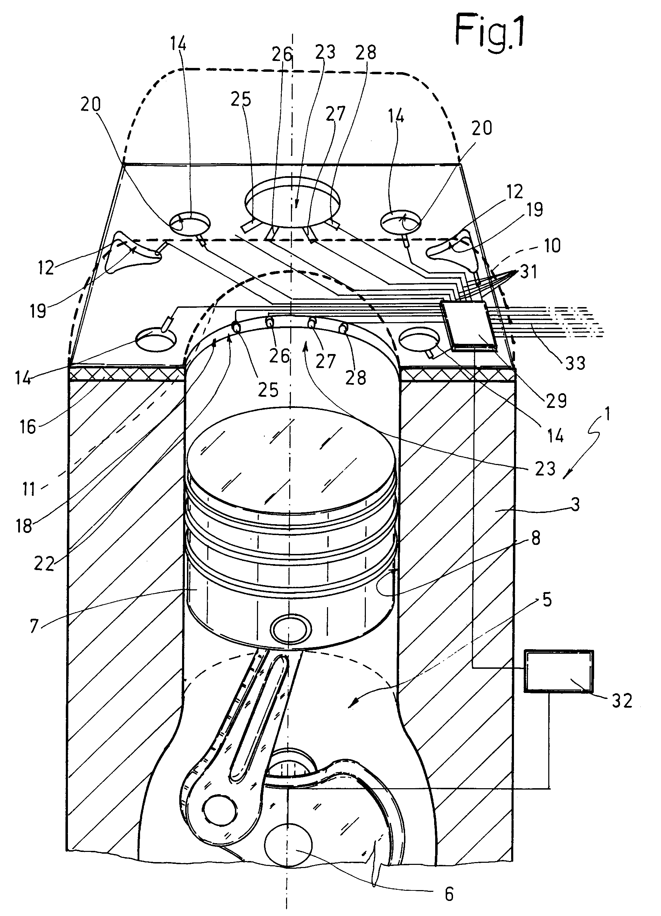

In Figure 1, the reference numeral 1 generally denotes an internal combustion engine of the type normally used for the propulsion of vehicles, for example, automobiles.

The engine 1 comprises an engine block 3, inside which is contained an actuating assembly comprising a thrust-imparting crank mechanism 5 adapted to impart rotating motion to a drive shaft 6.

The crank mechanism 5 comprises at least one piston 7 moving in rectilinear and reciprocating motion inside the block 3, and in particular inside a respective cylinder 8. Said cylinder 8 is open towards the exterior on the opposite side with respect to the shaft 6, and it is adapted to accommodate the piston 7 in a freely displaceable manner; it is closed by a cover or cylinder head 10 which is provided with a recess or combustion chamber 11 which faces the cylinder 8 itself. Said chamber 11 is adapted to receive in its interior an inflammable petrol-air mixture and to contain said mixture in its interior during the respective combustion.

The block 3 and the cylinder head 10 are provided with an internal passage 12 inside which flows the liquid for controlling the temperature under operating conditions, and with an internal passage 14 inside which the lubricating oil flows, which is fed through the passage 14 towards the drive shaft 6 and other moving parts of the engine.

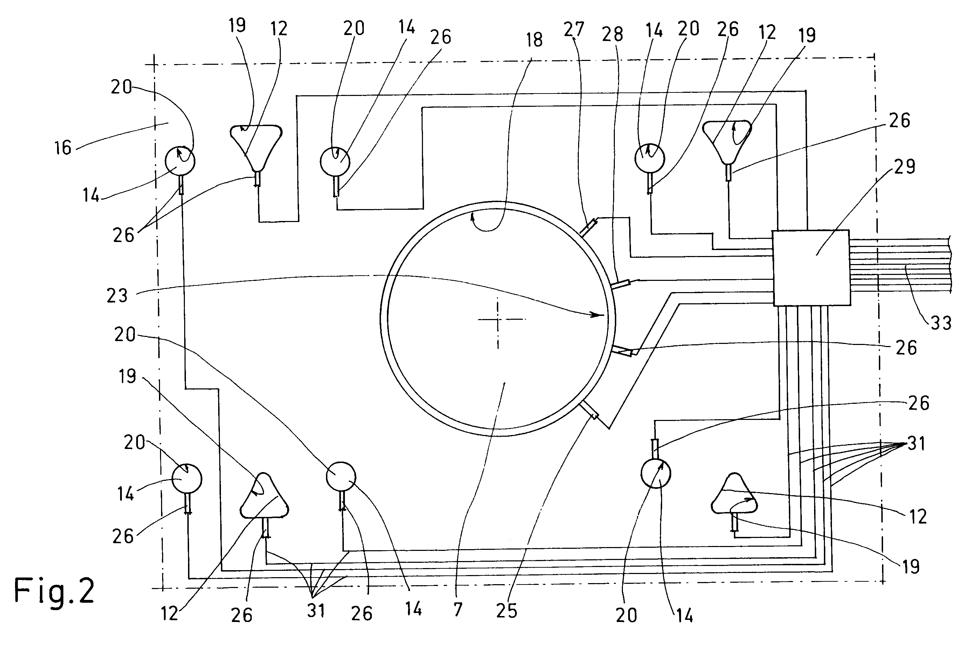

The connection between the cylinder head 10 and the block 3 must be hermetic so as to prevent any leak of the aforementioned liquids and, above all, of the expanding gases by means of which movement energy is transmitted to the crank mechanism 5. Therefore, between the cylinder head 10 and the block 3, the engine 1 has a gasket 16 (Figure 2), which is formed by a flat body made of multilayer composite material, and which has a plurality of openings, each of which enables the block 3 to be kept open towards the cylinder head 10 in alignment with each cylinder 8 and with the passages 12 and 14. In particular, the gasket 16 has an opening 18 in alignment with each cylinder 8, and openings 19 and 20 in alignment with the passages 12 and 14. The opening 18 is defined laterally by an annular surface 22 of a diameter which is close to but exceeds the bore of the piston 7.

As is known, each combustion chamber 11 is bounded at the bottom by the piston 7 and at the sides and at the top by the cylinder head 10.

It is also known that the rotation of the shaft 6 is induced by the violent combustion of an air-petrol (fuel-combustion agent) mixture in the combustion chamber 11, as a result of which the piston 7 is urged from the known top dead centre position (not shown) into the known bottom dead centre position (not shown). With a view to collecting in a direct manner the so-called automotive parameters, the gasket 16 incorporates a plurality of sensors 23 of siliceous type, each of which is disposed on the edge of the surface 22 and contacting the environment of the combustion chamber 11. In particular, the plurality of sensors 23 comprises a pressure sensor 25, a temperature sensor 26, a carbon dioxide (CO₂) sensor 27, and a sensor 28 for measuring the proportion of oxygen (O₂) in the exhaust gas.

The plurality of sensors 23 comprises further temperature sensors 26 incorporated in the gasket 16. In particular, the gasket 16 accommodates a sensor 26 in alignment with each of the openings 19 and 20 so as to enable the temperature of the cooling and lubricating liquids to be monitored. The gasket 16 further incorporates between the cylinder 8 and the two passages 12 and 14 an electronic control processor 29 and a plurality of tracks 31 for electrical connection between the sensors in the plurality of sensors 23 and the processor 29 itself, the tracks normally being made of copper. Said processor 29 is electrically connected to a stroke sensor 32 which is interfaced with the shaft 6, and which provides for instantaneously determining its angular position to permit the data received from the plurality of sensors 23 to be timed and to be coordinated with the current condition of the engine 1. The siliceous nature of the plurality of sensors 23 and the multilayer nature of the gasket 16 make it possible to form the plurality of sensors 23, tracks 31, the processor 29 or a respective active part, by application of siliceous material or copper blades on one or more layers of the gasket 16 itself. Furthermore, said gasket 16 has a single electric communication cable 33 comprising a feed channel adapted to supply electrical power to the plurality of sensors 23. Said cable 33 further comprises at least one electric communication channel connected to the processor 29, by way of which said plurality of sensors 23 and the processor 29 receive electrical power supply and by way of which the processor 29 itself exchanges the data received from the plurality of sensors 23 with the exterior.

It is evident from the foregoing that the use of the gasket 16 makes it possible to measure directly and in time a large number of automotive parameters, which normally cannot be monitored in conventional engines and which can only be collected indirectly on the basis of calculation algorithms. Accordingly, at substantially reduced cost and with a definite simplification of the measurement sequence, it is possible to transfer to any engine 1 the precision instrumentation which is substantially identical to that used in the laboratory for the study of engines. In other words, the engine 1 can be kept under observation whilst in use under any operating condition, with obvious advantages for the user resulting from improved controllability of the operation of the engine 1.

Furthermore, the correlation of the data received from the pressure sensor 25 and the sensor 32 makes it possible to plot the indicator diagram, namely the graph of useful work produced by the engine 1 in any cycle in relation to the stroke of the drive shaft 6. This correlation also makes it possible to provide a wide range of sensors, including a sensor adapted to measure the quantity of fresh charge returned by the piston 7 into the interior of the chamber 11; a stroke sensor for determining the stroke of the camshafts with respect to the stroke of drive shaft 6, to define accurately the angle of the drive shaft 6 in alignment with which the ignition of the mixture takes place; a detonation sensor; an incomplete-combustion sensor adapted to evaluate the quantity of fresh charge which is discharged unburnt from the engine.

Additionally, the presence of the temperature sensor 26 inside the chamber 11 makes it possible to keep a constant check on the combustion temperature which, combined with the data on the quantity o fresh charge introduced into the chamber 11, makes it possible to evaluate the combustion efficiency and the exhaust gas temperature.

Moreover, the presence of the temperature sensors 26 in contact with the cooling and lubricating liquids which circulate in the passages 12 and 14 makes it possible for information to be made constantly available regarding the respective temperature.

It is evident that the engine 1 described and illustrated above can be subject to modifications, without thereby departing from the scope of protection of the present invention.

## Claims

1. An internal combustion engine (1) comprising an engine block (3), which is hollow on the inside, and an actuating assembly (5) contained inside said block (3); said actuating assembly (5) comprising at least one piston (7) moving in reciprocating motion inside said block (3), and a drive shaft (6) kinetically connected with said piston (7); a cylindrical cavity (8) adapted to accommodate said piston (7) in a freely displaceable manner; a member (10) for closing said block (3), and rigidly connected to said block (3) so as to close said cylindrical cavity (8); a gasket (16) disposed between said block (3) and the closure member (10) so as to close off said cylindrical cavity (8) hermetically; a chamber (11) provided inside said closure member (10) and facing said cylindrical cavity (8) so as to contain an inflammable mixture; characterised in that said gasket (16) incorporates a plurality of sensors (23) for measuring physical-chemical parameters.

2. An engine according to claim 1, characterised in that at least one sensor of said plurality of sensors (23) is arranged so as to be facing said chamber (11).

3. An engine according to claim 2, characterised in that said plurality of sensors (23) comprises at least one pressure sensor (25).

4. An engine according to claim 2, characterised in that said plurality of sensors (23) comprises at least one temperature sensor (26).

5. An engine according to claim 2, characterised in that said plurality of sensors (23) comprises at least one sensor (27) for the chemical composition of the combustion gases.

6. An engine according to claim 2, characterised in that said plurality of sensors (23) comprises at least one sensor (28) for measuring the proportion of oxygen (O₂) in the exhaust gases.

7. An engine according to claim 2, characterised in that said plurality of sensors (23) comprises at least one temperature sensor (26), at least one sensor (27) for the chemical composition of the combustion gases, at least one sensor (28) for measuring the proportion of oxygen (O₂) in the exhaust gases.

8. An engine according to claim 1, characterised by comprising at least one passage (12, 14) provided inside said block (3) and said closure member (10), it being possible for a given liquid to flow through said passage (12, 14); at least one sensor of said plurality of sensors (23) being disposed in such a way that it faces said passage (12, 14).

9. An engine according to one of claims 3-7 or claim 8, characterised in that said plurality of sensors (23) comprises at least an electronic control unit (29), and a plurality of tracks (31) for electrical connection between at least one sensor of said plurality of sensors (23) and the electronic unit (29) itself.

10. An engine according to claim 9, characterised in that said gasket (16) is substantially flat and made of composite multilayer material.

11. An engine according to claim 10, characterised by comprising a stroke sensor (32) connected electrically to said drive shaft (6); and said electronic unit (29) being connected electrically to said stroke sensor (32).

12. An engine according to claim 11, characterised in that said gasket (16) comprises a communication cable (33) which, in turn, comprises a feed channel adapted to supply electrical power to said plurality of sensors (23) and at least one electric communication channel connected to said electronic control unit (29), by way of which the electronic unit (29) exchanges data with the exterior.

13. An engine according to claim 12, characterised in that said gasket (16) is bounded laterally in alignment with each cylindrical cavity (8) by an annular surface (18) which is of a diameter close to but exceeding a transverse dimension of said piston (7).

14. An engine according to claim 9, characterised in that at least one sensor (25, 26, 27, 28) of said plurality of sensors (23) and said electronic control unit (29) are made of substantially siliceous material.
